# EUROPÄISCHE PATENTSCHRIFT

(11) **EP 2 304 397 B1**
(45) Veröffentlichungstag und Bekanntmachung des Hinweises auf die Patenterteilung: **17.01.2018**
(21) Anmeldenummer: 09768869.1
(22) Anmeldetag: 05.05.2009
(51) Int. Cl.: G01G 23/00, G01G 3/14, G01G 21/28, G01G 23/37, B01F 13/08

(54) **MAGNETRÜHRER MIT EINER WIEGEEINRICHTUNG**
MAGNETIC STIRRER WITH A WEIGHING DEVICE
AGITATEUR MAGNÉTIQUE AVEC UN DISPOSITIF DE PESEE

(30) Priorität: 24.06.2008 DE 102008029901
(43) Veröffentlichungstag der Anmeldung: 06.04.2011
(73) Patentinhaber: IKA - Werke GmbH & Co. KG, 79219 Staufen (DE)
(72) Erfinder: WALDMANN, Dirk, 79426 Buggingen (DE); EBLE, Erhard, 79189 Bad Krozingen (DE)
(74) Vertreter: Kunst, Manuel Nikolaus Johannes
(86) Internationale Anmeldenummer: PCT/EP2009/003194
(87) Internationale Veröffentlichungsnummer: WO 2009/156020

(56) Entgegenhaltungen:
- EP-A- 0 332 213
- WO-A-2004/097349
- DE-C1- 4 201 693
- DE-C2- 10 122 274
- DE-T5-112006 001 134
- GB-A- 2 434 740
- JP-A- 3 243 830
- US-A1- 2002 074 170

## Beschreibung

Die Erfindung betrifft einen Magnetrührer mit einer Wiegeeinrichtung und mit einem Untergestell oder Gehäuse, in welchem ein elektrischer Rührantrieb in Form eines drehbaren Magneten oder in Form von wechselweise erregbaren Spulen angeordnet ist, wobei eine obere Halterung oder Aufstellplatte für ein Gefäß zur Aufnahme des Rührguts und eines Rührmagneten und unterseitig an dem Untergestell oder Gehäuse für die bodenseitige Auflagerung mehrere Aufstellfüße vorgesehen sind.

Aus der JP 03243830 A ist ein derartiger Magnetrührer bekannt, bei welchem eine Wiegeeinrichtung innerhalb eines Gehäuses angeordnet ist und zur Überwachung eines Titriervorganges dient. Die Wiegeeinrichtung muss also in dem Gehäuse entsprechend untergebracht und angeordnet werden und relativ zu dem Gehäuse die Wiegekräfte aufnehmen. Die Aufstellfüße des Gehäuses stützen lediglich die gesamte Anordnung in bekannter Weise ab.

Aus der DE 89 06 487 U1 ist eine oberschalige elektronische Waage mit einer Waagschale bekannt, die gegenüber dem Untergestell durch unterschiedliche Gewichte unterschiedlich absenkbar ist. In der Waagschale sind die Antriebsmittel für einen Magnetrührer integriert, so dass auf der Waagschale auch ein Gefäß für das zu rührende Gut und für den Rührmagneten aufgestellt werden kann. Das Untergestell dieser Waage hat keine Aufstellfüße, so dass ein unebener Untergrund für die diese Waage ungünstig ist. Darüber hinaus sind die für den Wiegevorgang erforderlichen Teile unter der Waagschale im Inneren der Waage angeordnet, was die Montage und eventuelle Reparaturen aufwendig macht.

Aus der DE 4201693 C1 ist ein Magnetrührer mit einer Überwachungseinheit für die Synchronität zwischen Rührkern und antreibendem Magentfeld bekannt. An dem Gehäuse ist dabei eine Waagschale vorhanden, die höher als übliche Waagen ausgebildet ist, um die Antriebsspulen für den Magnetrührer aufzunehmen.

Die Übertragung der Gewichtskraft von der Waagschale erfolgt im Inneren des Gehäuses über von außen unzugängliche Lastaufnehmer und Koppelelemente auf einen Lastarm eines Übersetzungshebels. Dieser ist durch ein Kreuzfedergelenk an einem Systemträger gelagert. Somit sind auch dabei die für den Wiegevorgang erforderlichen Teile unter der Waagschale im Inneren des Magnetrührers angeordnet, was die Montage und eventuelle Reparaturen aufwendig macht.

Es besteht deshalb die Aufgabe, einen Magnetrührer der eingangs genannten Art zu schaffen, bei welchem der Vorteil erhalten bleibt, korrekte Mischergebnisse einfach mit einer Wiegeeinrichtung feststellen zu können, wobei Gewichtsänderungen des Magnetrührers und vor allem des Mischgutes während des Rührvorganges oder auch schon beim Einfüllen oder Aufstellen des Rührgefäßes auf den Magnetrührer in konstruktiv einfacher Weise erfasst werden können und ein präzises Abwiegen von Mischungen und Mischungsbestandteilen möglich ist. Zur Lösung dieser Aufgabe ist der eingangs definierte Magnetrührer dadurch gekennzeichnet, dass alle Aufstellfüße in Gebrauchsstellung aufwärts oder in vertikaler Richtung gegen eine Rückstell- oder Federkraft nachgiebig oder verstellbar oder beweglich gelagert und mit einer Wiegeeinrichtung versehen oder verbunden oder in Wirkverbindung sind, dass alle nachgiebigen oder verstellbaren oder beweglichen Aufstellfüße Hebel oder Wippen oder Endstücke beaufschlagen, die mit der Wiegeeinrichtung zusammenwirken oder in Wirkverbindung oder verbunden sind, dass alle durch die Aufstellfüße bewegbaren Hebel oder Wippen oder Endstücke mit Kraftmesssensoren oder Messstreifen oder Piezoelementen als Bestandteile einer Wiegeeinrichtung versehen sind.

Dadurch ist es auf einfache Weise möglich, Gewichtsänderungen des Magnetrührers und somit vor allem des Mischgutes während des Rührvorganges oder auch schon beim Einfüllen oder Aufstellen des Rührgefäßes auf den Magnetrührer sofort zu erfassen, zweckmäßigerweise anzuzeigen und eine Reaktion darauf zu ermöglichen. Insbesondere kann eine sehr genaue Dosierung der einzelnen Mischbestandteile bei deren Einfüllen in ein schon auf der Aufstellplatte befindliches Rührgefäß erfolgen. Ferner können während des Rührvorganges sehr einfach und genau weitere Bestandteile hinzugefügt werden, da die dadurch bewirkte Gewichtsänderung sofort durch die Wiegeeinrichtung des Magnetrührers ermittelt wird.

Besonders günstig ist es, wenn die Aufstellfüße wenigstens teilweise aus federelastisch nachgiebigem Werkstoff bestehen und mit einem mit der Wiegeeinrichtung verbundenen, durch die Nachgiebigkeit der Aufstellfüße bewegbaren Übertragungselement zu der Wiegeeinrichtung versehen sind.

Besonders günstig ist es, wenn alle Aufstellfüße nachgiebig oder beweglich gelagert und mit einer Wiegeeinrichtung versehen oder verbunden sind. Dies ergibt ein besonders präzises Abwiegen von Mischungen und Mischungsbestandteilen.
Eine weitere Abwandlung kann vorsehen, dass mehrere oder alle Aufstellfüße untereinander mechanisch verbunden sind. Auch dadurch kann eine entsprechende Wiegeeinrichtung beaufschlagt oder angesteuert werden.

Die Verbindung zweier Aufstellfüße kann zwischen diesen einen Abstand zur Aufstellfläche haben oder wenigstens zwei Aufstellfüße können einstückig zu einem breiten Aufstellfuß vereinigt oder verbunden sein, der eine gemeinsame oder zwei Wiegeeinrichtungen aufweist oder beaufschlagt. Dadurch kann die Standfestigkeit des Magnetrührers verbessert und dennoch die Wiegefunktion erreicht werden. Im Hinblick auf gängige Magnetrührer mit mehreren einzelnen Aufstellfüßen ist jedoch die Ausführungsform bevorzugt, bei welcher diese einzelnen mehreren Aufstellfüße jeweils mit der oder einer Wiegemesseinrichtung beispielsweise über entsprechende Sensoren zusammenwirken, so dass auch bestehende Magnetrührerbauformen weitgehend unverändert bleiben können, aber die entsprechend beweglichen oder nachgiebigen Aufstellfüße mit Wiegefunktion erhalten können.

Zweckmäßig ist es, wenn die Kraftmesssensoren mehrerer oder aller Aufstellfüße mit einem Mikroprozessor oder Rechner in der Weise kombiniert sind, dass die an den einzelnen Aufstellfüßen aufgenommenen Gewichtskräfte addiert und/oder gemittelt werden. Somit erhält der Benutzer von vorneherein jeweils eine Gewichtsangabe beziehungsweise ein Gesamtgewicht oder dessen Änderung kann in geeigneter Weise angezeigt oder einem Steuergerät zugeführt werden, welches auf eine Gewichtsänderung reagieren kann.

Eine Ausgestaltung des erfindungsgemäßen Magnetrührers kann vorsehen, dass er einen elektronischen Speicher für Rezepturen aufweist, in welchem stoffmäßig und gewichtsmäßig definierte Einzelbestandteile von Mischungen hinterlegt sind und durch die integrierte Wiegefunktion menügeführt abarbeitbar sind. Somit können immer wiederkehrende Mischvorgänge erheblich rationalisiert und beschleunigt werden.

Eine weitere Ausgestaltung kann vorsehen, dass eine Bedienungs-, Steuerungs- und/oder Speichereinheit vorhanden ist und lösbar mit dem Untergestell oder Gehäuse des Magnetrührers verbunden und mit den in dem Untergestell oder Gehäuse befindlichen Antriebsteilen, mit der Wiegeeinrichtung und/oder mit weiteren Aggregaten über Funk oder über ein Kabel verbunden ist. Somit kann der Benutzer den Magnetrührer auch in größerem Abstand bedienen beziehungsweise die verschiedenen Anzeigen ablesen, was zum Beispiel dann vorteilhaft ist, wenn der Magnetrührer unter einer Schutzhaube beispielsweise in einem Abzug betätigt werden soll und der Benutzer dennoch auch Bedienungsfunktionen ausführen möchte.

Zweckmäßig kann es sein, wenn die Aufstellplatte für das Gefäß beheizbar ist. Vor allem eine beheizbare Aufstellplatte beeinflusst das Rührgut und dessen Gewicht, so dass die Kombination eines Magnetrührers mit beheizbarer Aufstellplatte und Wiegeeinrichtung besonders zweckmäßig ist.

Vor allem bei Kombination einzelner oder mehrerer der vorbeschriebenen Merkmale und Maßnahmen ergibt sich ein Magnetrührer, bei welchem das Gewicht des Rührguts und eine eventuelle Gewichtsänderung, sei es während des Rührvorganges, sei es durch Hinzufügen weiterer Bestandteile, sofort erfasst und erforderlichenfalls korrigiert oder ausgewertet werden kann.

Nachstehend ist ein Ausführungsbeispiel der Erfindung anhand der Zeichnung näher beschrieben. Es zeigt in zum Teil schematisierter Darstellung:
- Fig. 1: eine Vorderansicht eines erfindungsgemäßen Magnetrührers mit Blick auf die an dem Gehäuse befindliche, abnehmbare Bedienungseinheit,
- Fig. 2: einen Längsschnitt des Magnetrührers gemäß der Linie A-A in Fig. 1,

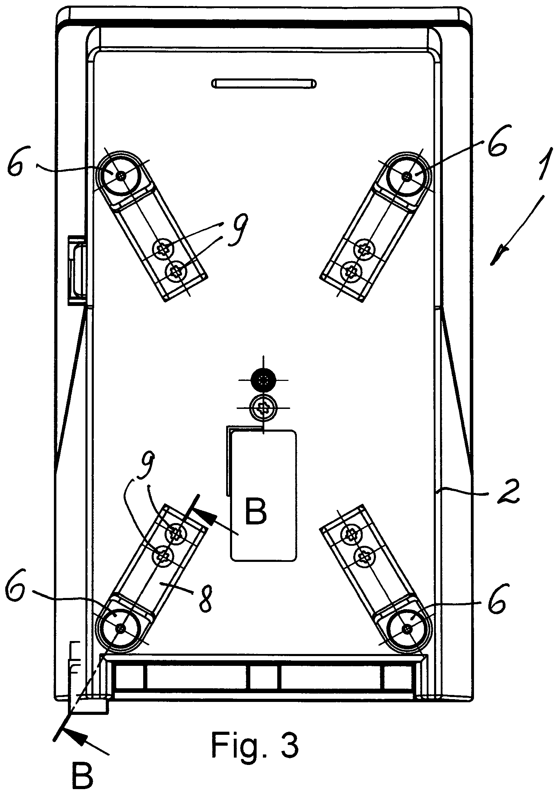

- Fig. 3: eine Ansicht der Unterseite des Magnetrührers mit Blick auf die dort vorgesehenen insgesamt vier Aufstellfüße,
- Fig. 4: in erheblich vergrößertem Maßstab einen Längsschnitt durch einen Aufstellfuß und dessen Befestigung gemäß der Schnittlinie B-B in Fig. 3,
- Fig. 5: in schaubildlicher Darstellung die von dem Gehäuse des Magnetrührers abgenommene Bedienungseinheit,
- Fig. 6: eine Draufsicht der Bedienungseinheit gemäß Fig. 5 sowie
- Fig. 7: einen Querschnitt der Bedienungseinheit gemäß der Schnittlinie C-C in Fig. 6.

Ein im Ganzen mit 1 bezeichneter Magnetrührer weist in üblicher Weise ein Gestell oder ein Gehäuse 2, im Folgenden "Gehäuse 2" genannt, auf, in welchem ein im Ganzen mit 3 bezeichneter elektrischer Rührantrieb in Form eines drehbaren Magneten 4 mit zugehörigem Antriebsmotor 4a angeordnet ist. Denkbar wäre auch, dass als Rührantrieb 3 wechselweise erregbare Spulen vorgesehen sind.

Eine obere Halterung oder Aufstellplatte 5 dient zur Aufnahme eines Gefäßes für das Rührgut und für einen Rührmagneten, der durch den drehbaren Magneten 4 in seine Rührbewegung gebracht wird.

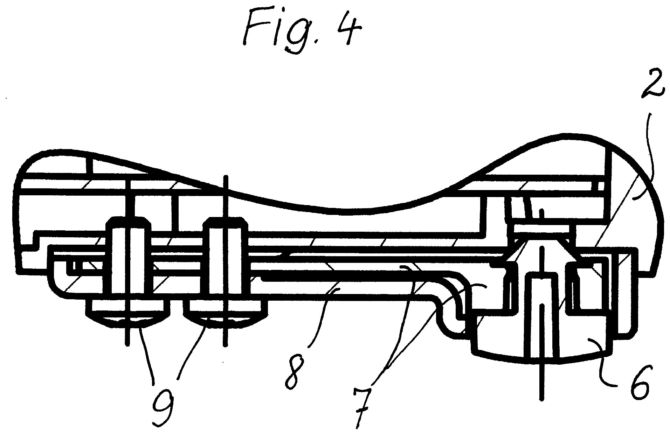

An der Unterseite des Gehäuses 2 sind für die bodenseitige Auflagerung des Magnetrührers 1 mehrere, im Ausführungsbeispiel vier Aufstellfüße 6 vorgesehen, deren einer in Fig. 4 vergrößert dargestellt ist.

Diese Aufstellfüße 6 sind aufwärts oder in vertikaler Richtung gegen eine Rückstell- oder Federkraft nachgiebig und verstellbar oder beweglich gelagert und in noch zu beschreibender Weise mit einer Wiegeeinrichtung versehen oder verbunden oder in Wirkverbindung, so dass das Gewicht eines Rührgefäßes und insbesondere des Rührgutes festgestellt und überwacht werden kann. Beispielsweise kann auch zu einem Mischgut ein oder mehrere Bestandteile während des Rührvorganges in der zutreffenden Dosierung hinzugefügt werden, weil die damit einhergehende Gewichtsänderung sofort am Magnetrührer 1 selbst erfasst wird.

Gemäß Fig. 4 ist vorgesehen, dass ein Teil der beweglichen Lagerung der Aufstellfüße 6 mit der Wiegeeinrichtung in Wirkverbindung ist, wobei die Wiegeeinrichtung selbst nicht dargestellt ist. Man erkennt dabei, dass die Aufstellfüße 6 jeweils einen als Feder ausgebildeten Hebel 7 beaufschlagen, der durch eine Vergrößerung der Gewichtskraft und damit eine stärkere Verstellung des Fußes 6 in seine Lagerung hinein ausgelenkt wird. Diese durch die Aufstellfüße 6 bewegbaren federartigen Hebel 7 können mit nicht näher dargestellten Kraftmesssensoren oder Messstreifen oder Piezoelementen versehen sein oder zusammenwirken, welche Bestandteile einer Wiegeeinrichtung sind. Somit kann die Bewegung des Fußes 6 bei zunehmendem Gewicht tiefer in das Gehäuse 2 hinein den federnden Hebel 7 stärker verformen und dies über die genannten Sensoren auf die Wiegeeinrichtung übertragen.

Dabei ist der als Feder ausgebildete Hebel 7 unterseitig durch eine Abdeckung 8 geschützt und kann also nicht ungewollt betätigt werden. Diese Abdeckung 8 und der federnde Hebel 7 sind dabei durch zwei Schrauben 9 an dem Gehäuse 2 befestigt beziehungsweise eingespannt.

Die Kraftmesssensoren aller Aufstellfüße 6 können dabei in nicht näher dargestellter Weise mit einem Mikroprozessor oder Rechner kombiniert sein, so dass alle von den einzelnen Aufstellfüßen 6 aufgenommenen Gewichtskraft-Anteile zu einem Gesamtgewicht addiert werden können.

Gegebenenfalls kann über die Wiegeeinrichtung auch ein zu dem Magnetrührer 1 gehörendes Steuergerät 10 beaufschlagt werden, das heißt, das Wiegeergebnis kann auch in die Steuerung des Magnetrührers 1 einbezogen werden.

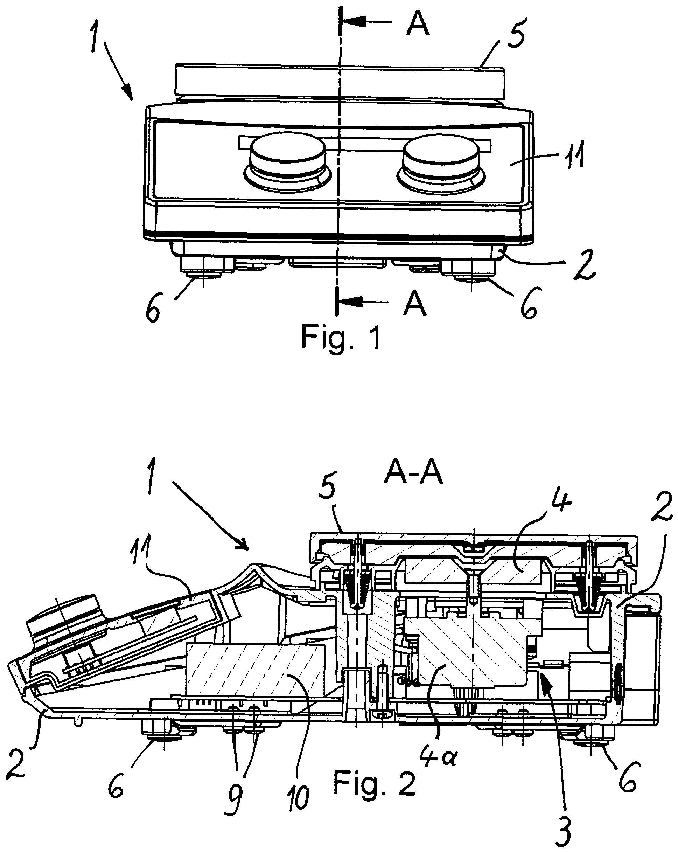

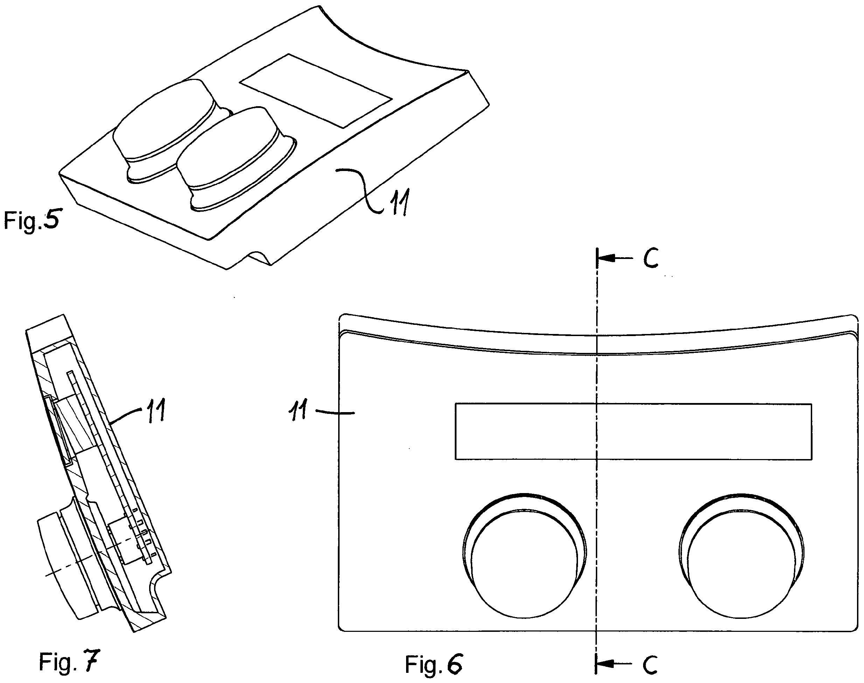

In den Fig. 5 bis 7 ist eine Bedienungseinheit 11 getrennt von dem Gehäuse 2 des Magnetrührers 1 darstellt, die in den Fig. 1 und 2 mit dem Gehäuse 2 lösbar verbunden ist. Diese Bedienungseinheit, die auch eine Steuerungs- oder Speichereinheit sein kann oder deren Funktionen umfasst, ist mit den in dem Untergestell oder Gehäuse 2 des Magnetrührers 1 befindlichen Antriebsteilen 3, der Steuerung 10, mit der Wiegeeinrichtung und/oder mit weiteren Aggregaten über Funk oder über ein Kabel verbunden, kann also sowohl in der in Fig. 1 und 2 dargestellten Position als auch getrennt davon über eine bestimmte Entfernung benutzt werden. Somit kann beispielsweise das ermittelte Gewicht oder ein sich änderndes Gewicht auch mit Abstand zu dem Magnetrührer 1 erfasst und erkannt werden, wenn nämlich beispielsweise der Magnetrührer 1 unter einer Abzugshaube benutzt werden soll.

Besonders zweckmäßig sind sowohl die Wiegeeinrichtung über die beweglichen Aufstellfüße 6 als auch die lösbare Bedienungseinheit 11, wenn die Aufstellplatte 5 beheizbar ist, weil dann während des Rührvorganges und durch die Beheizung mit entsprechenden Gewichtsänderungen zu rechnen ist.

Der Magnetrührer 1 weist ein Gehäuse 2 zur Aufnahme eines Antriebs 3 und eine Halterung oder Aufstellplatte 5 für ein Rührgefäß sowie einen Rührmagneten auf. Für die bodenseitige Auflagerung des Magnetrührers 1 sind mehrere Aufstellfüße 6 vorgesehen, die beweglich oder nachgiebig gelagert und mit einer Wiegemesseinrichtung oder zu einer Wiegemesseinrichtung gehörenden Sensoren verbunden sind, so dass das Gewicht des Rührgutes oder auch eine Gewichtsänderung jederzeit ohne aufwendige zusätzliche Wiegevorgänge ermittelt werden können.

## Patentansprüche

1. Magnetrührer (1) mit einer Wiegeeinrichtung und mit einem Untergestell oder Gehäuse (2), in welchem ein elektrischer Rührantrieb (3) in Form eines drehbaren Magneten (4) oder in Form von wechselweise erregbaren Spulen angeordnet ist, wobei eine obere Halterung oder Aufstellplatte (5) für ein Gefäß zur Aufnahme des Rührguts und eines Rührmagneten und unterseitig an dem Untergestell oder Gehäuse für die bodenseitige Auflagerung mehrere Aufstellfüße (6) vorgesehen sind, **dadurch gekennzeichnet, dass** alle Aufstellfüße (6) in Gebrauchsstellung aufwärts oder in vertikaler Richtung gegen eine Rückstell- oder Federkraft nachgiebig oder verstellbar oder beweglich gelagert und mit einer Wiegeeinrichtung versehen oder verbunden oder in Wirkverbindung sind, dass alle nachgiebigen oder verstellbaren oder beweglichen Aufstellfüße (6) Hebel (7) oder Wippen oder Endstücke beaufschlagen, die mit der Wiegeeinrichtung zusammenwirken oder in Wirkverbindung oder verbunden sind, dass alle durch die Aufstellfüße bewegbaren Hebel (7) oder Wippen oder Endstücke mit Kraftmesssensoren oder Messstreifen oder Piezoelementen als Bestandteile einer Wiegeeinrichtung versehen sind, und dass die Aufstellplatte (5) für das Gefäß beheizbar ist.

2. Magnetrührer nach Anspruch 1, **dadurch gekennzeichnet, dass** die Aufstellfüße (6) wenigstens teilweise aus federelastisch nachgiebigem Werkstoff bestehen und mit einem mit der Wiegeeinrichtung verbundenen, durch die Nachgiebigkeit der Aufstellfüße (6) bewegbaren Übertragungselement (7) zu der Wiegeeinrichtung versehen sind.

3. Magnetrührer nach Anspruch 1 oder 2, **dadurch gekennzeichnet, dass** die Kraftmesssensoren aller Aufstellfüße (6) mit einem Mikroprozessor oder Rechner in der Weise kombiniert sind, dass die an den einzelnen Aufstellfüßen (6) aufgenommenen Gewichtskräfte addiert und/oder gemittelt werden.

4. Magnetrührer nach einem der Ansprüche 1 bis 3 **dadurch gekennzeichnet, dass** er einen elektronischen Speicher für Rezepturen aufweist, in welchem stoffmäßig und gewichtsmäßig definierte Einzelbestandteile von Mischungen hinterlegt sind und durch die integrierte Wiegefunktion menügeführt abarbeitbar sind.

5. Magnetrührer nach einem der Ansprüche 1 bis 4 **dadurch gekennzeichnet, dass** eine Bedienungs-, Steuerungs- und/oder Speichereinheit (11) vorhanden ist und lösbar mit dem Untergestell oder Gehäuse (2) verbunden und mit den in dem Untergestellt oder Gehäuse (2) befindlichen Antriebsteilen, mit der Wiegeeinrichtung und/oder mit weiteren Aggregaten über Funk oder über ein Kabel verbunden ist.

## Claims

1. Magnetic stirrer (1) comprising a weighing device and a base or housing (2), in which an electrical stirring drive (3) is arranged in the form of a rotatable magnet (4) or in the form of coils which can be excited in an alternating manner, wherein an upper holder or mounting plate (5) is provided for a vessel for holding the material to be stirred and a stirring magnet, and a plurality of mounting feet (6) are provided on the lower side on the base or housing for providing support on the base side, **characterised in that** all of the mounting feet (6) are mounted such that, in a position of use, they are flexible or adjustable or movable upwards or in a vertical direction against a restoring force or spring force and are provided with or connected or operatively connected to a weighing device, **in that** all of the flexible or adjustable or movable mounting feet (6) act upon levers (7) or rockers or end pieces which cooperate with or are operatively connected or connected to the weighing device, **in that** all of the levers (7) or rockers or end pieces which can be moved by the mounting feet are provided with force measurement sensors or measuring strips or piezo elements as components of a weighing device, and **in that** the mounting plate (5) for the vessel can be heated.

2. Magnetic stirrer as claimed in claim 1, **characterised in that** the mounting feet (6) consist at least partially of a spring-elastically flexible material and are provided with a transmission element (7) to the weighing device, said transmission element being connected to the weighing device and being movable by reason of the flexibility of the mounting feet (6).

3. Magnetic stirrer as claimed in claim 1 or 2, **characterised in that** the force measurement sensors of all of the mounting feet (6) are combined with a microprocessor or computer in such a manner that the weight forces recorded on the individual mounting feet (6) are added and/or averaged.

4. Magnetic stirrer as claimed in any one of claims 1 to 3, **characterised in that** it has an electronic memory for formulations, in which memory individual components of mixtures defined with respect to substance and weight are stored and can be processed in a menu-driven manner by the integrated weighing function.

5. Magnetic stirrer as claimed in any one of claims 1 to 4, **characterised in that** an operating, control and/or memory unit (11) is provided and is detachably connected to the base or housing (2) and is connected to the drive parts located in the base or housing (2), to the weighing device and/or to further units wirelessly or by means of a cable.

## Revendications

1. Agitateur magnétique (1) avec un dispositif de pesée et avec un soubassement ou un corps (2), dans lequel est disposé un entraînement d'agitation électrique (3) sous la forme d'un aimant tournant (4) ou sous la forme de bobines pouvant être excitées alternativement, dans lequel il est prévu un support supérieur ou une plaque de dépôt supérieure (5) pour un récipient destiné à contenir la matière à agiter et un aimant d'agitation ainsi que plusieurs pieds de pose (6) sur le côté inférieur du soubassement ou du corps pour le support du fond, **caractérisé en ce que** tous les pieds de pose (6) sont supportés en position d'utilisation de façon souple ou réglable ou mobile vers le haut ou en direction verticale contre une force de rappel ou de ressort et sont munis ou reliés ou en liaison fonctionnelle avec un dispositif de pesée, **en ce que** tous les pieds de pose souples ou réglables ou mobiles (6) agissent sur des leviers (7) ou des bascules ou des pièces terminales, qui coopèrent ou sont en liaison fonctionnelle ou sont en relation avec le dispositif de pesée, **en ce que** tous les leviers (7) ou bascules ou pièces terminales déplaçables par les pieds de pose sont munis de capteurs d'effort ou de jauges de mesure ou d'éléments piézoélectriques comme composants d'un dispositif de pesée, et **en ce que** la plaque de dépôt (5) pour le récipient peut être chauffée.

2. Agitateur magnétique selon la revendication 1, **caractérisé en ce que** les pieds de pose (6) se composent au moins en partie d'un matériau souple élastique et sont munis d'un élément de transmission (7) vers le dispositif de pesée, qui est relié au dispositif de pesée et est déplaçable en raison de la souplesse des pieds de pose (6).

3. Agitateur magnétique selon la revendication 1 ou 2, **caractérisé en ce que** les capteurs de mesure de force de tous les pieds de pose (6) sont combinés avec un microprocesseur ou un ordinateur de telle manière que les forces pondérales enregistrées aux pieds de pose individuels (6) soient additionnées et/ou que leur moyenne soit calculée.

4. Agitateur magnétique selon l'une quelconque des revendications 1 à 3, **caractérisé en ce qu'**il présente une mémoire électronique pour des formules, dans laquelle des constituants individuels de mélanges, définis au niveau de la matière et du poids, sont stockés et peuvent être exécutés selon un menu par la fonction de pesée intégrée.

5. Agitateur magnétique selon l'une quelconque des revendications 1 à 4, **caractérisé en ce qu'**il se trouve une unité de conduite, de commande et/ou de mémoire (11), qui est assemblée au soubassement ou au corps (2) de façon séparable et qui est reliée aux parties d'entraînement se trouvant dans le soubassement ou le corps (2), au dispositif de pesée et/ou à d'autres ensembles par une liaison radio ou par un câble.
